Europäisches Patentamt

European Patent Office

Office européen des brevets

(11) Publication number: **0 307 304**
**A2**

## (12) EUROPEAN PATENT APPLICATION

(21) Application number: **88402243.5**

(22) Date of filing: **07.09.88**

(51) Int. Cl.⁴: **B 60 R 13/06**

(30) Priority: **09.09.87 US 94427**

(43) Date of publication of application:
**15.03.89 Bulletin 89/11**

(84) Designated Contracting States: **DE FR GB**

(71) Applicant: **SHELLER-GLOBE, INC.**
**1505 Jefferson Avenue**
**Toledo Ohio 43697 (US)**

(72) Inventor: **Keeney, John**
**340 Middle Road**
**Keokuk, Iowa 52632 (US)**

(74) Representative: **Clisci, Serge et al**
**S.A. FEDIT-LORIOT CONSEILS EN PROPRIETE**
**INDUSTRIELLE 38, avenue Hoche**
**F-75008 Paris (FR)**

(54) Sealing element for flush mounted window.

(57) The sealing element comprises an outer wall for retaining
and guiding a window and an inner element for attaching to a
vehicle body flange. A common carrier extends throughout the
sealing element and forms a support for the outer wall and the
inner element. The common carrier is rigid and imperforate in
the outer wall and flexible within the remainder of the seal to
enable it to be easily roll formed and to avoid read through of
the carrier to the exterior surface of the outer wall.

*FIG. 2.*

EP 0 307 304 A2

**Description**

# SEALING ELEMENT FOR FLUSH MOUNTED WINDOW

### Background of the Invention

#### Field of the Invention

This invention relates to sealing elements for automobiles and more particularly to sealing elements for flush mounted vehicle windows.

#### Discussion of Related Art

In the design of modern automobiles, it is well-known that a low coefficient of drag of the vehicle body provides enhanced performance and reduced fuel consumption. Thus, one constraint of modern design engineers is the coefficient of drag figure. In order to reduce the drag coefficient, vehicle windows may be designed to be flush or substantially flush with the outer surface of the vehicle body. However, it is difficult to seal a flush mounted moveable window against the elements. It is therefore desireable to have some type of outer window guide member to prevent the window from moving away from the vehicle body leaving air gaps. However, at the same time, any such outer guide member must be relatively thin so that the window will still be substantially flush with the vehicle body. Furthermore, the outer guide member must be easily mounted to the vehicle.

In order to provide flush mounted windows, it has been suggested to use a relatively rigid sealing member to both seal and guide a moveable window. For example, Published French Application No. 2,546,113 and Published French Application No. 2,564,047 show window seals having a very rigid carrier so that the seal itself is rigid. An outer wall of the seal actually provides an outer restraining wall for the moveable window. This type of structure has been found to be quite effective in use. However, the manufacture of such a seal can be difficult in that, because the seal is rigid, a roll forming apparatus must be used to conform the seal to the window opening. Because the carrier is rigid and has planar walls in two planes, bending the seal can be a difficult procedure.

Seals having punched and corrugated carriers to promote longitudinal flexibility are also known. Such flexible seals avoid the problem of requiring a roll forming apparatus to shape the carrier, but may not have the necessary rigidity for use as a window retaining element. Also, because punched or corrugated carriers are not smooth, when a coating is extruded onto the carrier, "read through" occurs wherein the coating takes on the shape of the carrier. This produces a rough external appearance which is not appropriate for use on the external surface of a vehicle.

### Summary of the Invention

One object of the present invention is to provide a sealing element for a flush mounted moveable vehicle window which will provide a positive seal against the window by inhibiting outward movement of the window, yet permit a substantially flush window configuration.

Another object of the present invention is to provide a sealing element for flush mounted windows in which there is no read through so that a smooth, substantially planar and aesthetic appearance is presented.

A further object of the present invention is to provide a sealing element for flush mounted windows which can be relatively easily shaped by a conventional roll forming apparatus into the shape of a window opening.

In accordance with the above and other objects, the present invention comprises a first member for making contact and being retained in an opening for receiving a moveable window and a second member cooperating with the first member for defining a window channel. The second member forms an outer restraint for the window. A common carrier extends between and forms a support for the first member and the second member. The common carrier comprises a rigid metal and has an imperforate, substantially planar, shape-sustaining, longitudinally rigid portion in the second member and a longitudinally flexible portion in the first member.

The longitudinally flexible portion of the carrier may have perforations or corrugations to provide longitudinal flexibility.

The first and second members form a first generally U-shaped element having an outer leg and an inner leg. The invention may also include a second generally U-shaped element wherein the outer leg of the first U-shaped element is substantially planar and forms the outer window restraint, and the carrier extends through the U-shaped elements and is longitudinally rigid in the outer leg and longitudinally flexible otherwise. The second U-shaped element may have a common wall with the first U-shaped element.

The present invention also contemplates a method comprising forming a window seal carrier by modifying an elongated strip of relatively rigid metal so that a first elongated portion of the metal remains relatively rigid and a second elongated portion of the metal is relatively flexible. The carrier is transversely bent to form a window guide channel such that the first elongated portion forms an outer guiding and retaining wall for a window received in the channel. The carrier is longitudinally bent to take the shape of a window opening.

The second elongated portion of the metal may be made relatively flexible by forming perforations therein or by forming corrugations therein.

The method may further comprise applying a coating of soft material over the carrier. The coating may be applied by extrusion.

Brief Description of the Drawings

The above and other objects will become more readily apparent as the invention is more fully understood from the detailed description to follow, reference being had to the accompanying drawings in which like reference numerals represent like parts throughout, and in which:

Fig. 1 is a side elevational view of an automobile door incorporating a seal according to the present invention;

Fig. 2 is a perspective view showing the relationship of a seal according to the present invention and a moveable window;

Fig. 3 is a transverse sectional view of a first embodiment of the seal of the present invention;

Fig. 4 is a top plan view of the punched carrier of the seal in Fig. 3;

Fig. 5 is a perspective view of the punched carrier transversely bent to form the profile of the seal of Fig. 3;

Fig. 6 is a transverse sectional view of a second embodiment of the seal of the present invention; and

Fig. 7 is a transverse sectional view of a third embodiment of the seal according to the present invention.

Detailed Description of the Preferred Embodiments

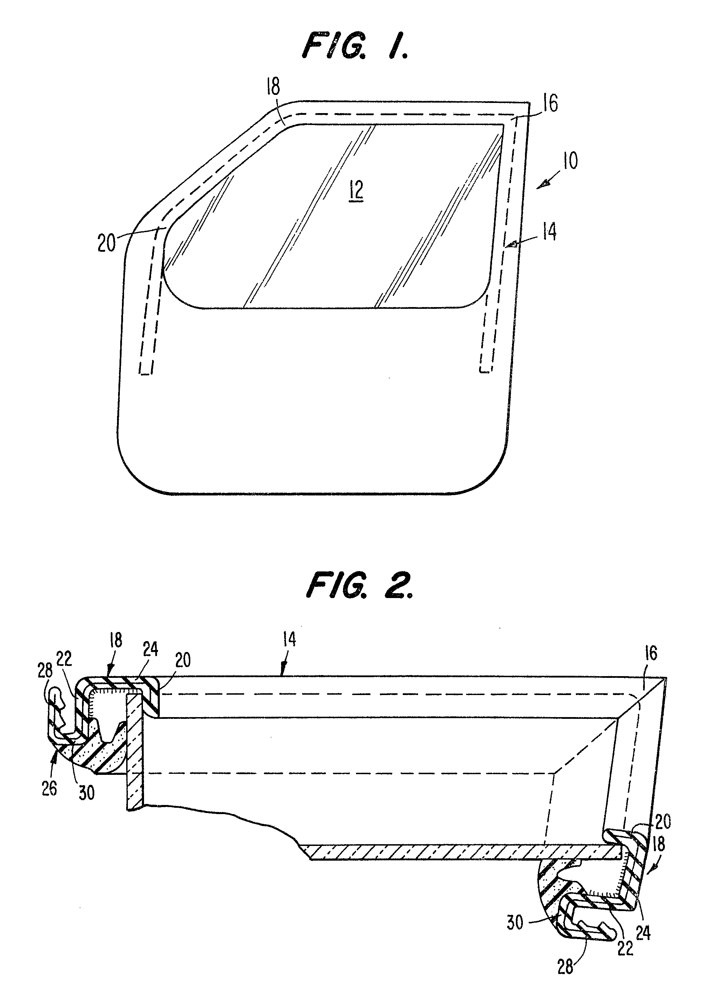

Fig. 1 shows a typical automobile door 10 having a vertically moveable window 12 mounted in a sealing and guiding structure 14 according to the present invention. Structure 14 extends around the top of the window 12 and is bent at corners 12a, 12b and 12c to conform to the shape of the window opening.

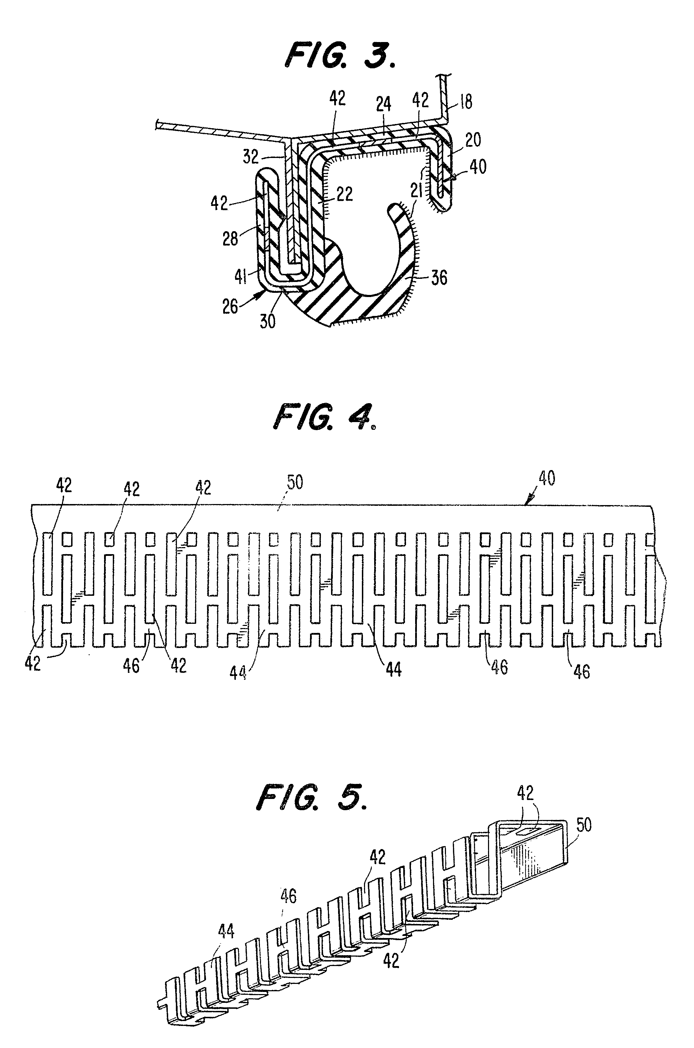

Fig. 2 shows the configuration of the sealing and guiding structure 14. This structure has a first U-shaped portion 18 comprising an outer wall 20, a second wall 22 and a web portion 24 extending between walls 20 and 22. The structure also has a second U-shaped portion 26 formed of an inner wall 28, wall 22 and a second web portion 30. The second U-shaped portion 26 attaches to a body flange 32 of the automobile, as shown in Fig. 3. The length of the web portion 24 is sufficient that the outer wall 20 is substantially flush with the outer surface of the vehicle door panel 34.

A sealing lip 36 is mounted on the U-shaped portion 26 and extends toward the wall 20 so as to form a seal against window 12. Flocking 21 may be applied to the inner surface of U-shaped member 18 and the outer surface of the sealing lip 36 as shown in Figs. 2 and 3 to reduce friction and promote sliding of the window 12.

The sealing and guiding structure 14 is formed with a carrier member 40 over which a layer of rubber or synthetic resin 41 is extruded. In prior designs, the carrier member 40 has been solid and inflexible longitudinally. This made it difficult to bend the structure to conform to the shape of the window opening.

According to the present invention, as shown in Fig. 3, the carrier 40 extends through the entire width of the sealing and guiding structure 14 but is solid only inside of wall 20. The carrier is punched as shown at openings 42 elsewhere. In this manner, only the outer wall 40 of the carrier is solid and rigid. The remainder of the carrier is relatively flexible so that the sealing and guiding structure 14 can be more easily bent to conform to the window shape using a roll bending apparatus.

Fig. 4 shows the punched carrier 40 in greater detail. The carrier may be made from steel, aluminum or other rigid material. Preferably, the carrier is made from one millimeter thick steel so that it is substantially rigid and resists bending. The carrier is punched using known techniques so as to leave a longitudinal portion of the carrier 50 imperforate and substantially planar but so as to form openings 42 in the remainder of the carrier. The size and the positioning of the openings 42 are consistent with standard punched carriers as would be apparent to one of ordinary skill in the art. As is conventional with punched carriers, the openings ultimately form strips of material 44 which are parallel and interconnected by webs 46. However, unlike conventional punched carriers, the portion 50 along one lateral edge of the carrier remains solid.

After the carrier is punched, it is transversely bent into the shape of the sealing and guiding element 14, as shown in Fig. 5. As can be clearly seen in Fig. 5, the rigid, substantially planar portion 50 forms a support for the outer wall 20, whereas the punched portion of the carrier forms the support for walls 22 and 28 as well as connecting webs 24 and 30. By forming a sufficient number of perforations 42, the punched portion of the carrier can be made as flexible as desired. For example, the perforations can be approximately an eighth of an inch thick leaving metal strips 44 which are about 3/16 inch thick. The web portions 46 then have a length equal to about the thickness of the openings 42 and can have a width approximately the same size. As a consequence, when the carrier 40 is longitudinally bent, roll forming is required in only a single plane since the remainder of the carrier is highly flexible. This facilitates the roll forming operation, reduces cost and results in a much neater and cleaner bend.

After the carrier 40 is transversely bent as shown in Fig. 5, the coating of rubber 41 or the like is extruded over the carrier. Sealing lips may be formed wherever desired, such as on the outer wall 20, during this extrusion process. Additional sealing lips such as sealing lip 36 can either be formed of the same rubber coating 41 or can be formed in a co-extrusion process using a softer material.

The final coated product is longitudinally bent into the shape of the window opening. It is noted that the solid portion 50 of the carrier gives the final product a rigidity which is useful for automated assembly of the sealing and guiding strip 14 in the door. That is, it is preferable to have the sealing and guiding strip 14 rigid in its final shape so that it can be fit directly into the door opening. Also, the outer wall 20 is relatively rigid along its length to insure proper guiding of the window. Finally, the outer surface of portion 50 of the carrier is substantially planar so that when the rubber coating 52 is extruded onto it, the outer surface of the rubber coating on wall 20 is also smooth and planar and presents an aesthetic, finished appearance which complements the finished appearance of the outside of the vehicle.

The length of the wall 20 depends on the application. However, in practice, it has been found that a length of approximately 1/2 inch is adequate with the solid portion of the carrier being approximately 3/8 inch. This provides the desired degree of rigidity and enables the outer surface of the sealing and guiding element 14 to be smooth and wrinkle-free.

It should be understood that any process which can produce a flexible portion of a carrier will suffice in place of a punching process. That is, while web portions 46 are shown in Figs. 4 and 5 with adjacent web portions being offset from one another to provide flexibility, a portion of the carrier may be corrugated to provide flexibility. Any other process which will enable the same portion of the carrier to be flexible would also suffice. The primary concern is that the final product need be roll formed in only one plane so as to reduce the difficulty of this step in the manufacturing process.

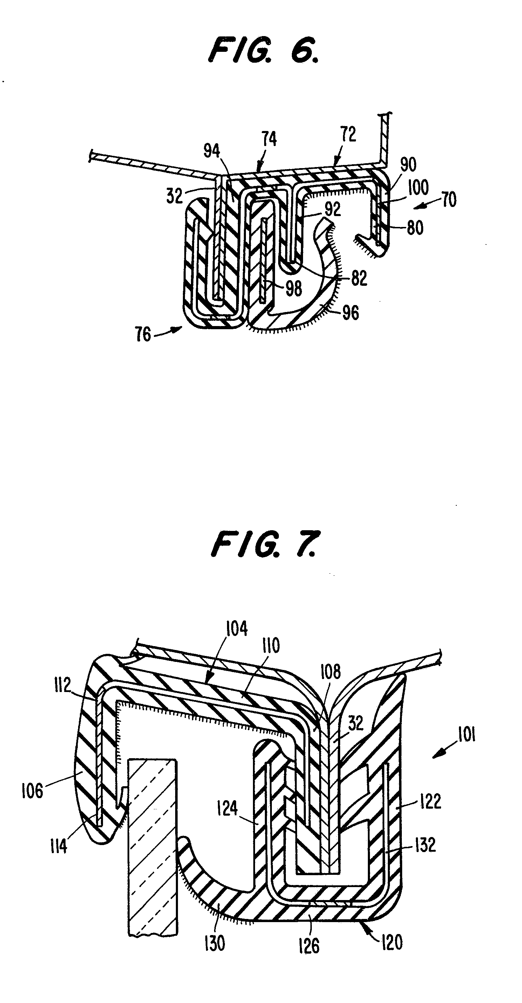

A partially flexible and partially solid carrier according to the present invention can be used successfully in many different sealing and guiding structures. For example, Fig. 6 shows a sealing and guiding structure 70 having a first U-shaped portion 72, a second U-shaped portion 74 and a third U-shaped portion 76. The U-shaped portion 76 attaches to a vehicle flange 32. In this structure, an outer wall 90 retains the window within the first U-shaped portion 72. A first central wall 92 forms the inner wall of the first U-shaped portion 72 and the outer wall of the second U-shaped portion 74. A second inner wall 94 completes the second U-shaped portion 74 and forms the outer wall of the third U-shaped portion 76. A sealing lip 96 is clamped between walls 92 and 94 and has its own carrier 98. In this configuration, a carrier 80 extends throughout the sealing and guiding element 70 and is formed from a single piece of metal. The carrier is bent back on itself at bend 82 to form the support structure for wall 92. Accordingly, in this area, there is a double thickness of carrier. In addition, this carrier has four parallel walls which must be bent in order to longitudinally bend the sealing and guiding element to conform to the window shape. Accordingly, this carrier is particularly rigid in the longitudinal direction. By punching all of the carrier except for the portion 100 in the outer wall 90, the carrier can be made more flexible and can easily be roll formed.

Fig. 7 shows a third sealing and guiding element 101 which is composed of two separate members. A first member 104 is generally U-shaped and has an outer wall 106 and an inner wall 108 connected by a web portion 110. A first carrier 112 forms the support for member 104. Carrier 112 includes a solid portion 114 imbedded in the outer wall 104. The remainder of carrier 112 is punched so as to enable this portion of the carrier to be easily roll formed to conform to the shape of the window.

A second member 120 is also U-shaped and has a first leg 122 and a second leg 124 interconnected by a web portion 126. A flocked sealing lip 130 extends toward wall 106. This member has its own carrier 132. This carrier can be completely punched if desired so as to enable member 120 to be flexed into the desired shape when it is applied to the vehicle.

The member 104 is first applied to the vehicle flange 32 and is glued or riveted in place. Member 120 is then applied over the flange 32 and inner wall 108 to help hold member 104 to the vehicle body.

It should also be noted that the inner wall of each of the sealing and guiding elements forms a decorative trim piece on the interior of the vehicle. For example, wall 122 of sealing and guiding element 101 is exposed to the interior of the vehicle and is intended to be aesthetic. Because a punched carrier is used in this wall, ordinarily, there would be read through of the punched carrier which would compromise the aesthetics of the element. However, it is conventional to flock the outer surface of this member. Flocking provides a rougher surface which hides read through. However, if it is desired to have a smooth surface on the interior, member 120 of sealing and guiding element 101 can also be made with a partially solid and partially punched carrier. That is, the portion of the carrier 132 within inner wall 122 could be made solid to eliminate read through. In this manner, both element 104 and element 120 could be easily manufactured and roll formed into the desired shape and then mounted in place. There would be no read through on either the interior or the exterior of the sealing and guiding element so that aesthetic appeal would be maintained on both the inside and the outside of the vehicle without the need for any flocking applied to exterior surfaces.

The foregoing description is set forth for the purpose of illustrating the present invention but is not intended to limit the invention. Clearly, numerous substitutions, additions and other changes could be made to the invention without departing from the scope thereof as set forth in the appended claims.

## Claims

1. A device, comprising:
a first member for making contact with and being retained in an opening for receiving a movable window;
a second member cooperating with said first member for defining a window channel, said second member forming an outer restraint for said window;
a common carrier extending between and forming a support for said first member and said second member, said common carrier comprising a rigid metal and having an imperforate, substantially planar, shape-sustaining, longitudinally rigid portion in said second member and having a longitudinally flexible portion in said first member.

2. A device as claimed in claim 1 wherein said longitudinally flexible portion of said carrier has perforations to provide longitudinal flexibility.

3. A device as claimed in claim 1 wherein said longitudinally flexible portion of said carrier is corrugated to provide longitudinal flexibility.

4. A device as claimed in claim 1 wherein said first and second members form a first generally U-shaped element having an outer leg and an inner leg and further including a second generally U-shaped element, wherein said outer leg is substantially planar and forms said outer window restraint and wherein said carrier extends through said U-shaped elements and is longitudinally rigid in said outer leg and longitudinally flexible otherwise.

5. A device as claimed in claim 4 wherein said first generally U-shaped element and said second generally U-shaped element have a common wall.

6. A device as claimed in claim 4 including a third generally U-shaped element, and a separate seal member retained in said third generally U-shaped element and extending toward said outer leg.

7. A device as claimed in claim 1 wherein said first and second members form a first generally U-shaped element having an outer wall and an inner wall, and further including a second generally U-shaped element separate from said first generally U-shaped element, said second generally U-shaped element having a pair of legs spaced by a distance sufficient to receive said inner wall of said first generally U-shaped element.

8. A device as claimed in claim 7 wherein said second generally U-shaped element comprises a second metal carrier covered by a softer material.

9. A device as claimed in claim 8 wherein said second metal carrier is longitudinally flexible.

10. A device for retaining and sealing a movable window, comprising:
an elongated member having a portion which is longitudinally relatively flexible and a portion which is longitudinally relatively rigid, said longitudinally relatively rigid portion forming an outer window restraint, and said longitudinally relatively flexible portion defining with said longitudinally relatively rigid portion a window channel; and
a sealing lip formed on at least one of said longitudinally relatively flexible portion and said longitudinally relatively rigid portion for sealing against a window received in said window channel.

11. A device as claimed in claim 10 wherein said longitudinally relatively flexible portion and said longitudinally rigid portion include a common carrier comprising a metal, said carrier being covered by a softer material to form said longitudinally relatively rigid portion and said longitudinally relatively flexible portion and having a longitudinally relatively rigid wall in said longitudinally rigid portion and including means for causing said carrier to be longitudinally relatively flexible in said longitudinally relatively flexible portion.

12. A device as claimed in claim 11 wherein said means for causing said carrier to be longitudinally relatively flexible comprises perforations in said carrier.

13. A device as claimed in claim 10 wherein said elongated member has an outer wall and an inner wall, said walls being relatively parallel, said outer wall being included in said longitudinally relatively rigid portion and said inner wall being included in said longitudinally relatively flexible portion.

14. A device as claimed in claim 11 wherein said carrier is on the order of 1mm thick.

15. A method, comprising:
forming a window seal carrier by modifying an elongated strip of relatively rigid metal so that a first elongated portion of said metal remains relatively rigid and is relatively planar, and a second elongated portion of said metal is relatively flexible;
transversely bending said carrier to form a window guide channel such that said first elongated portion of said metal forms an outer guiding and retaining wall for a window received in said channel; and
longitudinally bending said carrier to take the shape of a window opening.

16. A method as claimed in claim 15 wherein said step of forming comprises forming perforations in said second elongated portion.

17. A method as claimed in claim 15 including applying a coating of soft material over said carrier.

18. A method as claimed in claim 15 wherein said step of longitudinally bending said carrier comprises bending said carrier using a roll forming apparatus.

19. A method as claimed in claim 17 wherein said step of applying a coating comprises extruding said coating onto said carrier.

20. A method as claimed in claim 15 including mounting said coated carrier in an automobile window opening such that an outside surface of said coated outer wall forms an outside surface of said automobile.

EP 0 307 304 A2

# FIG. 1.

# FIG. 2.

## FIG. 3.

## FIG. 4.

## FIG. 5.

# FIG. 6.

# FIG. 7.